Europäisches Patentamt

European Patent Office

Office européen des brevets

(11) Publication number: **0 214 714**
**B1**

# EUROPEAN PATENT SPECIFICATION

(45) Date of publication of the patent specification:
19.09.90

(51) Int. Cl.⁵: **B01J 2/16**

(21) Application number: **86304160.4**

(22) Date of filing: **02.06.86**

(54) Method of granulating moisture-absorbing powder material.

(30) Priority: 02.09.85 JP 193435/85
12.09.85 JP 202248/85
21.10.85 JP 233450/85

(43) Date of publication of application:
18.03.87 Bulletin 87/12

(45) Publication of the grant of the patent:
19.09.90 Bulletin 90/38

(84) Designated Contracting States:
CH DE FR GB IT LI NL SE

(56) References cited:
AT-B- 370 766
FR-A- 2 342 763
US-A- 3 880 968

(73) Proprietor: KABUSHIKI KAISHA
OKAWARASEISAKUSHO, 2147-1 Kando Yoshidacho,
Haibaragun Shizuoka-ken(JP)

(72) Inventor: Shibata, Takeo, 486-3 Shima Kanayacho,
Haibara-gun Shizuoka-ken(JP)
Inventor: Nagasawa, Kazumasa, 1411-7 Kawashiri
Yoshidacho, Haibara-gun Shizuoka-ken(JP)

(74) Representative: Jennings, Nigel Robin et al, KILBURN &
STRODE 30 John Street, London WC1N 2DD(GB)

## Description

The present invention relates to a method of granulating moisture-absorbing powder material of the type which includes maintaining the powder material in a state of agitation in a chamber and adding a binder in liquid form to the powder material thereby causing agglomeration of the powder material into granules.

In a known granulating method of the type in which starting powder material is fluidised in a stream of hot air and, while adding a binder liquid to the fluidised powder material, the powder particles are induced to adhere and agglomerate to produce granules by the addition of a binder liquid, the moisture content of the powder material which permits adequate fluidisation to be achieved has a range depending on the properties of the powder material. If the moisture exceeds the upper limit of the range, the flowing movement is rapidly slowed down and large lumps are produced. If the moisture content increases further, the flowing movement is stopped and the powder material solidifies to agglomerate form and the granulating apparatus is rendered inoperable.

In this type of conventional granulation it has been the usual practice to use a control method which includes detecting the temperature or humidity of the exhaust air and controlling the temperature of the hot air or the feed rate of the binder in dependence thereon. When using a batch method, it has been usual to set the feed time of the binder by means of a timer while maintaining the temperature and flow rate of the hot air constant. When granulating a moisture-absorbing powder material, the range of moisture content within which the proper flowing movement of the powder is maintained is extremely small with an upper limit of about 3% D.B. (3% liquid with respect to the dry powder) in the case of amino acid-containing flavouring material and about 5% D.B. in the case of powder soy and exceeding this upper limit of the moisture content has the effect of rapidly impairing the fluidity of the powder and then terminating the flowing movement.

In the conventional methods it has been impossible to detect small changes in the exhaust air temperature or humidity and it has been impossible to maintain constant the amount of hot air supplied due, for example, to the clogging of the filter incorporated in the apparatus. Thus, it has been necessary to operate with an extremely low moisture content in order to avoid the danger of terminating the flowing movement of the powder material within the apparatus and agglomerating the powder material due to, for instance, the repeated addition of the binder liquid and intermediate drying.

Thus the conventional methods have suffered from the disadvantage that since it is impossible to detect an increase in the moisture content which would impair the flowing movement it has been necessary to monitor the fluid state by visual inspection and to use a relatively low moisture content which results in a decrease in the growth rate of granules which in turn necessitates a longer granulating time and makes it difficult to increase the product yield with respect to the desired granule size.

It is an object of the invention to provide a method of granulating moisture-absorbing powder material which not only prevents the occurrence of any substantial deterioration in the flowability of the powder material and produces granules of a stable particle size in a continuous operation but also reduces the granulation time and increases the product yield.

According to the present invention a method of the type referred to above is characterised by continuously monitoring the moisture content of the agitated powder material in a non-contact manner with an infra-red absorption moisture meter arranged within the chamber or a space communicating directly therewith and controlling the growth rate of the granules by controlling the rate of supply of binder or the amount of binder supplied in dependence on the said moisture content. The method in accordance with the invention enables the moisture content of the powder material to be accurately measured and maintained substantially at the optimum value whereby the granulation of the powder material is performed both efficiently and in the minimum of time to produce granules of a desired particle size. The powder material is preferably maintained in a state of agitation by blowing hot air through it thereby fluidising it. The temperature of the hot air is preferably monitored and maintained substantially constant with the aid of a temperature sensor and temperature regulating means.

In the preferred embodiment the binder is sprayed onto the powder through a spray nozzle and the rate of binder supply is varied in dependence on the measured value of the moisture content by adjusting the speed of the binder feed pump or adjusting a regulating valve in the binder supply line. The moisture content of the powder material is preferably brought up to a value substantially equal to or slightly less than the value at which the fluidisability of the powder material is significantly impaired.

The moisture content is monitored in a non-contact manner and the characteristic which is monitored is the infra-red absorptivity.

Further features and details of the invention will be apparent from the following description of one specific embodiment which is given by way of example with reference to the accompanying drawings, in which:

Figure 1 is a schematic diagram showing the general construction of a granulating apparatus employing a method according to the present invention;

Figure 2 is a detailed sectional elevation of the major components of the moisture content sensor shown in Figure 1; and

Figures 3 and 4 are graphs showing the comparative measurements taken in granulating methods controlled conventionally and in accordance with the invention.

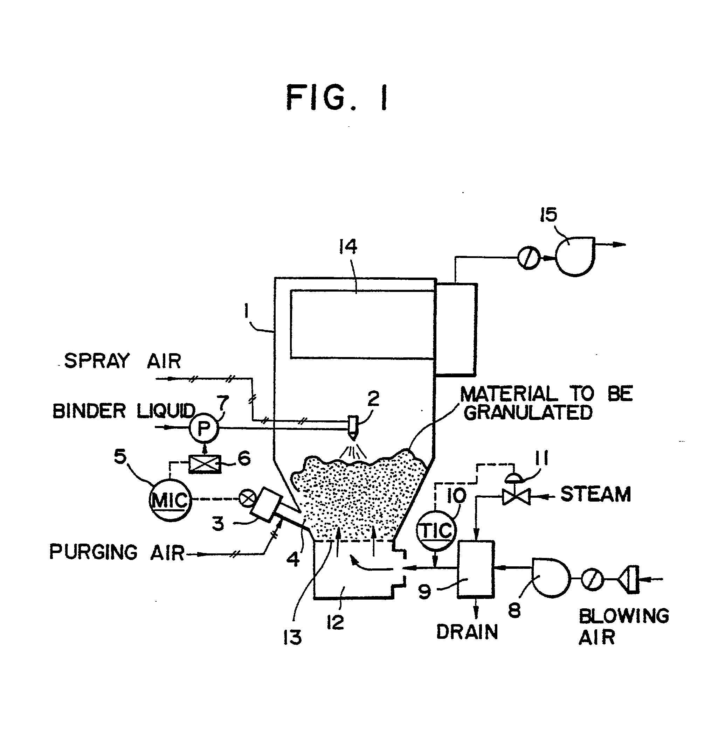

Figure 1 shows a granulating apparatus 1 for containing the processing powder material within which are a spray nozzle for spraying a liquid binder onto the powder material and an infra-red absorption-type moisture meter 3 for detecting continuously and in a non-constact manner the moisture content of the powder material through a detecting tube 4. The moisture meter 3 is connected to a moisture content regulator which is operable in response to the output signal of the moisture meter 3 and which in turn is connected to a speed setting means or controller 6 of a binder feed pump 7 whose speed may be varied by the speed controller 6 to vary the amount of binder liquid supplied to the nozzle 2. The powder material is maintained in a state of agitation in the granulating apparatus and in this case is fluidised by hot air which is blown by a fan 8 into a hot air chamber 12 and then through an opening in the bottom of the granulating apparatus which accommodates a gas dispersing plate 13 in which a plurality of apertures 13a is formed. The air is drawn from the atmosphere by a fan 8 and then heated in a heat exchanger 9 which is heated by steam. A temperature sensor 10 detects the temperature of the air leaving the heat exchanger 9 and produces an output signal. A steam regulating valve 11 is operated in dependence on the difference between this output signal and a predetermined reference signal to supply a sufficient volume of steam to maintain the temperature of the air substantially constant. A bag filter 14 situated within the upper portion of the granulating apparatus 1 collects fine powder which is entrained in the air leaving the fluidised powder and then drops back down into the fluidised bed. An exhaust fan 15 discharges the air cleaned by the filter 14 to the atmosphere.

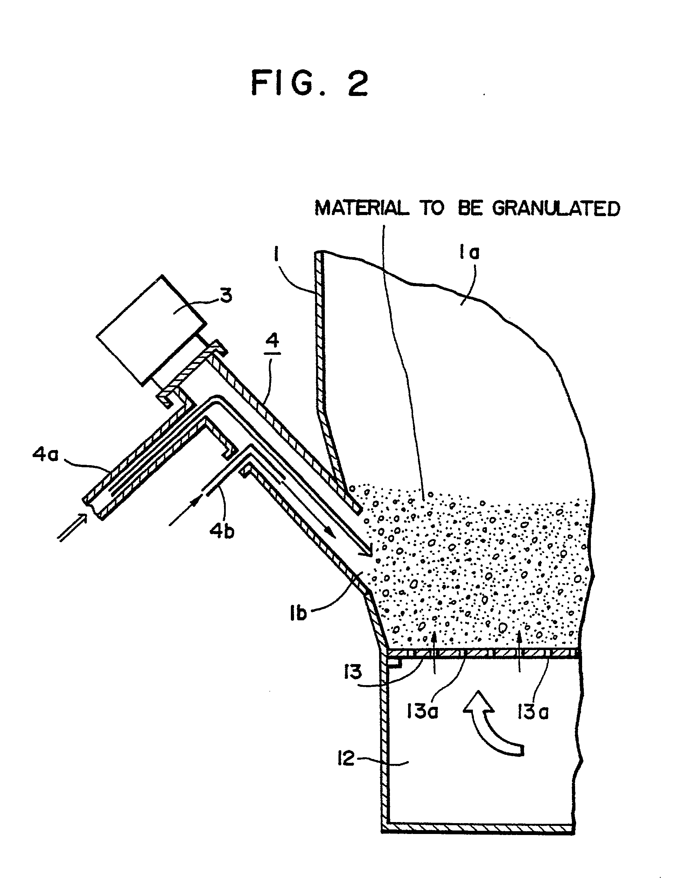

As may be seen in Figure 2, the moisture meter 3 communicates with the fluidised bed via the inclined tube 4. Within the tube 4 there are a main purge pipe 4a and a bypass purge pipe 4b. In use, purging air is supplied through these pipes from a source of air which is not shown.

In use, air drawn in by the fan 8 is heated to the desired temperature and forced into the fluidisation chamber 1a of the granulating apparatus 1 from the hot air chamber 12 through the holes 13a in the gas dispersing plate 13 and the powder material within the fluidisation chamber 1a is maintained in a fluidised state. Purging air is supplied through the main purging tube 4a into the detecting tube 4 and blown into the fluidised powder material present in the vicinity of the communication with the fluidisation chamber. Thus, powder material is prevented from entering into the detecting tube 4 but moves across its open end. The purging air supplied from the bypass purging tube 4b removes the powder material which tends to deposit on the bottom of the detecting tube 4.

The interface between the fluidised powder material and the air in the tube 4 thus apparently remains substantially stationary in relation to the moisture meter 3 and satisfies the requirement for a measuring surface for measuring the degree of attenuation of infra-red rays projected at and reflected from the material. The absorption of light energy by the material is substantially proportional to its moisture content.

The moisture content of the powder material detected by the moisture meter 3 is represented by an electrical signal which is applied to the moisture content regulator 5 and the speed setting means 6 is operated in dependence on the difference between the detected moisture content and a desired value thereof corresponding to the type of the powder material. Binder liquid is mixed with spraying air at a rate determined by the rotational speed of the binder feed pump 7 which is in turn determined by the output of the speed setting means 6 and is atomised and sprayed from the spray nozzle 2 thus inducing flowing of the powder material within the desired ranges of temperatures and moisture content and thereby causing granulation of the powder material.

Measurements have been made relating to the fluidised bed granulation of moisture-absorbing powder material such as powder soy or amino acid-containing seasoning and these have shown: (1) The growth rate of the particles is determined substantially only by the moisture content of the powder material irrespective of the amount of solid matter contained in the added binder liquid. (2) The amount of the solid matter in the added binder liquid has an effect on the strength of particles and the percentage of the particulate material which reverts to powder during the finishing and drying operations is increased with a decrease in the amount of the solid matter. (3) If the finished and dried particles are screened in e.g. a 100-mesh sieve and the yield of the particles which do not pass through the sieve is compared with that obtained in a conventional method, for the same amount of added binder solid matter, the product yield is increased if the granulation is performed at a higher moisture content of the powder material.

In other words, it has been found that by suitably determining the moisture content of the powder material at the end of the addition of the binder or the rate of increase of the moisture content during the addition of the binder, it is possible to control the particle size of the product as desired and hence it is possible to improve the yield of the product of the desired particle size.

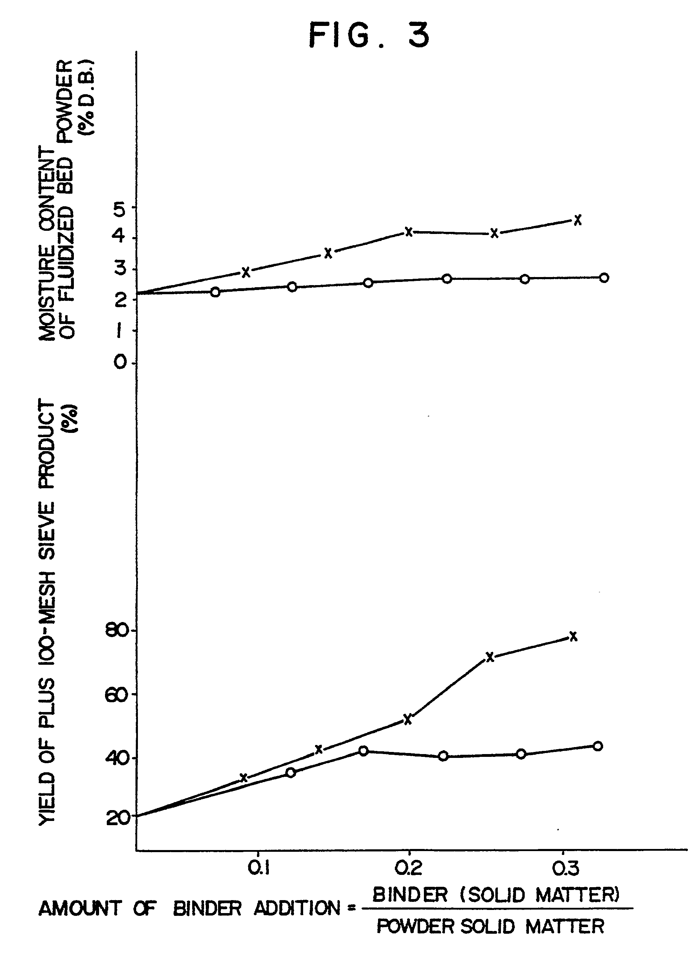

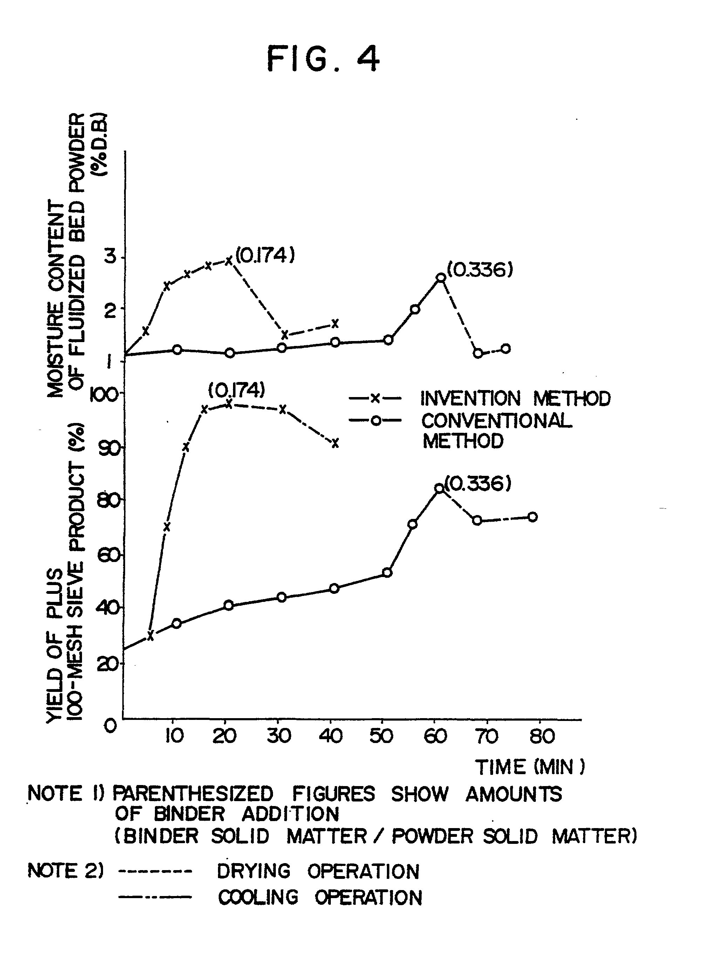

Figures 3 and 4 are graphs of measurements made during experiments conducted in accordance with the above method used with a batch-type granulating apparatus compared with a conventional method. The points indicated by the symbol X are from the method in accordance with the invention and those indicated by the symbol O are from the conventional method. The graph of Figure 3 shows the results obtained when granulating powder soy, and plots a comparison between the moisture contents and the yields of plus 100-mesh sieve product, that is to say the yield of particles which do not pass through a 100-mesh sieve, against the amount of added binder liquid. It has been found that there is a definite correlation between the moisture content and the yield of plus 100-mesh sieve product and that the yield can be increased by 35% by increasing the moisture content at the end of the operation by 2% D.B., that is to say by 2% based on the dry weight of the powder.

The graph of Figure 4 shows the results obtained when granulating amino acid-containing seasonings and plots the yields of plus 100-mesh sieve products and moisture contents against time. It has been found that by setting the moisture content at the end of the operation of 28% D.B., which is just below the content at which insufficient fluidisation occurs, it is possible to reduce the operating time and the addition of binder liquid to about one half and increase the yield by 18% by comparison with the conventional method.

The operating conditions in the experiments were as follows:

Apparatus used: batch-type fluidised bed granulating apparatus incorporating an agitator

Fluidised bed area : 0.2m²
Hot air temperature : 80°C
Fluidising air velocity: 0.82m/sec
Binder : 20% potato starch
Binder liquid addition : (conventional method)
5-minute spraying at 70 g/min alternating with
1-minute in-process drying for 0-48 minutes (cycle spraying) followed by 110 g/min for 48-60 minutes (continuous spraying)

(Method according to the invention)

1. Maximum binder feed rate, 110 g/min
2. Moisture content regulator setting, 28% D.B.

In the described embodiment, the material to be granulated is agitated by blowing hot air throught it to fluidise it However, this can also be effected by the use of a mechanical agitator or the like incorporated in the granulating apparatus.

## Claims

1. A method of granulating moisture-absorbing powder material, including maintaining the powder material in a state of agitation in a chamber and adding a binder in liquid form to the powder material thereby causing agglomeration of the powder material into granules, characterised by continuously monitoring the moisture content of the powder material in a non-contact manner with an infra-red absorption moisture meter (3) arranged within the chamber or a space communicating directly therewith and controlling the growth rate of the granules by controlling the rate of supply of binder or the amount of binder supplied in dependence on the said moisture content.

2. A method as claimed in Claim 1, characterised in that the powder material is maintained in a state of agitation by blowing hot air through it thereby fluidishing it.

3. A method as claimed in Claim 2, characterised in that the temperature of the hot air supplied to the chamber is monitored and maintained substantially constant.

4. A method as claimed in any one of the preceding claims, characterised in that the binder is sprayed onto the powder through a spray nozzle (2) and that the rate of binder supply is varied in dependence on the measured value of the moisture content by adjusting the speed of the binder feed pump (7) or adjusting a regulating valve in the binder supply line.

5. A method as claimed in any one of Claims 1 to 4, in which the moisture content of the powder material is brought up to a value substantially equal to or slightly less than the value at which the fluidisability of the powder material is significantly impaired.

6. A method as claimed in any one of the preceding claims, characterised in that the moisture meter (3) communicates with the chamber via a detecting tube (4) and that air is blown through the detecting tube (4) into the chamber thereby substantially preventing powder material from entering into the detecting tube (4).

7. A method as claimed in claim 7, characterised in that air is blown through the detecting tube (4) within a main purge pipe (4a) and within a bypass purge pipe (4b) which is directed so that air leaving it removes powder material deposited on the bottom of the detecting tube (4).

8. Apparatus for granulating moisture-absorbing powder material including a chamber wherein the powder material is maintained in a state of agitation and means for adding a binder in liquid form to the powder material so as, in use, to cause agglomeration of the powder material into granules, characterised by an infra-red absorption moisture meter (3) arranged within the chamber (1a) or a space (4) communicating directly therewith and arranged to continuously monitor the moisture content of the powder material in a non-contact manner and means (6, 7) for controlling the rate of supply of binder or the amount of binder supplied in dependence on the said moisture content.

9. Apparatus as claimed in claim 8, characterised by means for maintaining the powder material in a state of agitation comprising a fan (8) arranged to blow air in through the bottom of the chamber (1a).

10. Apparatus as claimed in claim 9, characterised by a temperature sensor (10) arranged to monitor the temperature of the hot air supplied to the chamber and connected to means (11) for supplying heat to the air so as to maintain the temperature of the air substantially constant.

11. Apparatus as claimed in any one of claims 8 to 10, characterised in that the means for adding binder to the powder material include a spray nozzle (2) and a binder feed pump (7).

12. Apparatus as claimed in any one of claims 8 to 11, characterised by a detecting tube (4) in which the moisture meter (3) is situated and by a main purge pipe (4a) through which, in use, air is blown so as substantially to prevent powder material from entering into the detecting tube (4).

13. Apparatus as claimed in claim 12, characterised by a bypass purge pipe (4b) which is directed so that, in use, air leaving it removes powder material deposited on the bottom of the detecting tube (4).

## Patentansprüche

1. Verfahren zum Granulieren von feuchtigkeitsabsorbierendem Pulver, bestehend aus: Aufrechterhalten eines Mischbewegungszustands des Pulvers in einer Kammer und Zufügen eines Bindemittels in flüssiger Form zu dem Pulver, um dadurch die Agglomeration des Pulvers zu Körnchen zu bewirken, gekennzeichnet durch laufende Überwachung des Feuchtigkeitsgehalts des Pulvers auf berührungsfreie Weise mittels eines Infrarotabsorptions-Feuchtemessers (3), der in der Kammer oder in einem direkt mit dieser in Verbindung stehenden Raum angeordnet ist und die Wachstumsgeschwindigkeit der Körnchen durch Steuern der Zufuhrgeschwindigkeit des Bindemittels oder der in Abhängigkeit vom Feuchtigkeitsgehalt zugeführten Menge des Bindemittels steuert.

2. Verfahren nach Anspruch 1, dadurch gekennzeichnet, daß das Pulver mittels Durchblasen von Heißluft und dadurch bedingtes Fluidisieren in einem Mischbewegungszustand gehalten wird.

3. Verfahren nach Anspruch 2, dadurch gekennzeichnet, daß die Temperatur der in die Kammer eingeführten Heißluft überwacht und im wesentlichen konstant gehalten wird.

4. Verfahren nach einem der vorangehenden Ansprüche, dadurch gekennzeichnet, daß das Bindemittel durch eine Sprühdüse (2) auf das Pulver gesprüht wird, und daß die Zufuhrrate des Bindemittels in Abhängigkeit vom gemessenen Wert des Feuchtigkeitsgehalts durch Verstellen der Drehzahl der Bindemittel-Förderpumpe (7) oder durch Verstellen eines Regelventils in der Bindemittelversorgungsleitung verändert wird.

5. Verfahren nach einem der Ansprüche 1 bis 4, wobei der Feuchtigkeitsgehalt des Pulvers auf einen Wert gebracht wird, der im wesentlichen gleich oder geringfügig niedriger ist als der Wert, bei welchem die Fluidisierbarkeit des Pulvers wesentlich beeinträchtigt wird.

6. Verfahren nach einem der vorangehenden Ansprüche, dadurch gekennzeichnet, daß der Feuchtemesser (3) mit der Kammer über ein Meßrohr (4) in Verbindung steht, und daß Luft durch das Meßrohr (4) in die Kammer geblasen wird, um dadurch im wesentlichen zu verhindern, daß Pulver in das Meßrohr (4) eindringt.

7. Verfahren nach Anspruch 6, dadurch gekennzeichnet, daß Luft durch das Meßrohr (4) innerhalb eines Hauptausblasrohrs (4a) und eines Nebenausblasrohrs (4b) geblasen wird, welches derart ausgerichtet ist, daß die aus ihm austretende Luft am Boden des Meßrohrs abgesetztes Pulver beseitigt.

8. Vorrichtung zum Granulieren von feuchtigkeitsabsorbierendem Pulver, mit einer Kammer, in welcher das Pulver in einem Mischbewegungszustand gehalten wird, und mit einer Einrichtung zum Zusetzen eines Bindemittels in flüssiger Form zum Pulver, um beim Betrieb die Agglomeration des Pulvers zu Körnchen zu bewirken, gekennzeichnet durch einen Infrarotabsorptions-Feuchtemesser (3), der innerhalb der Kammer (1a) oder eines direkt mit dieser in Verbindung stehenden Raums (4) vorgesehen und derart angeordnet ist, daß er laufend den Feuchtigkeitsgehalt des Pulvers in berührungsfreier Weise überwacht, und durch eine Einrichtung (6, 7) zum Steuern der Zufuhrgeschwindigkeit des Bindemittels oder der in Abhängigkeit vom Feuchtigkeitsgehalt zugeführten Menge des Bindemittels.

9. Vorrichtung nach Anspruch 8, gekennzeichnet durch eine Einrichtung zum Halten des Pulvers in einem Mischbewegungszustand, bestehend aus einem Gebläse (8), welches zum Einblasen von Luft durch den Boden der Kammer (1a) ausgelegt ist.

10. Vorrichtung nach Anspruch 9, gekennzeichnet durch einen Temperaturfühler (10), der zum Überwachen der Temperatur der in die Kammer eingeleiteten Heißluft ausgelegt und mit einer Einrichtung (11) zur Wärmezufuhr für die Luft verbunden ist, um die Temperatur der Luft im wesentlichen konstant zu halten.

11. Vorrichtung nach einem der Ansprüche 8 bis 10, dadurch gekennzeichnet, daß die Einrichtung zum Zusetzen von Bindemittel zum Pulver eine Sprühdüse (2) und eine Bindemittel-Förderpumpe (7) umfaßt.

12. Vorrichtung nach einem der Ansprüche 8 bis 11, gekennzeichnet durch ein Meßrohr (4), in welchem der Feuchtemesser (3) untergebracht ist, und durch ein Hauptausblasrohr (4a), durch das beim Betrieb Luft dergestalt geblasen wird, daß das Eindringen von Pulver in das Meßrohr (4) verhindert wird.

13. Vorrichtung nach Anspruch 12, gekennzeichnet durch ein Nebenausblasrohr (4b), welches derart ausgerichtet ist, daß die beim Betrieb daraus austretende Luft am Boden des Meßrohrs (4) abgesetztes Pulver beseitigt.

**Revendications**

1. Procédé de granulation d'une matière pulvérulente absorbant l'humidité, qui consiste à maintenir la matière pulvérulente dans un état d'agitation dans une chambre et à ajouter à la matière pulvérulente un liant sous forme liquide pour provoquer ainsi l'agglomération de la matière pulvérulente en granules, caractérisé en ce qu'on contrôle continuellement la teneur en humidité de la matière pulvérulente sur un mode sans contact à l'aide d'un hygromètre à absorption d'infra-rouges (3) disposé dans la chambre ou un espace en communication directe avec celle-ci et on règle le taux de croissance des granules en surveillant le taux de distribution du liant ou la quantité de liant fournie selon ladite teneur en humidité.

2. Procédé selon la revendication 1, caractérisé en ce qu'on maintient la matière pulvérulente dans un état d'agitation en soufflant de l'air chaud à travers elle et, ainsi, en la fluidisant.

3. Procédé selon la revendication 2, caractérisé en ce qu'on règle la température de l'air chaud fournie à la chambre et on la maintient à une valeur sensiblement constante.

4. Procédé selon l'une quelconque des revendications précédentes, caractérisé en ce qu'on pulvérise le liant sur la poudre à travers un ajutage de pulvérisation (2) et on fait varier le débit de distribution du liant selon la valeur mesurée de la teneur en humidité en réglant la vitesse de la pompe (7) de distribution du liant ou en ajustant une soupape de régulation dans la conduite d'amenée du liant.

5. Procédé selon l'une quelconque des revendications 1 à 4, dans lequel on porte la teneur en humidité de la matière pulvérulente à une valeur sensiblement égale ou légèrement inférieure à la valeur à laquelle l'aptitude à la fluidisation de la poudre est notablement détériorée.

6. Procédé selon l'une quelconque des revendications précédentes, caractérisé en ce que l'hygromètre (3) communique avec la chambre par un tube détecteur (4) et en ce que l'air est insufflé à travers le tube détecteur (4) dans la chambre pour empêcher notablement l'entrée de la matière pulvérulente dans le tube détecteur (4).

7. Procédé selon la revendication 6, caractérisé en ce que l'air est insufflé à travers le tube détecteur (4) par une conduite principale de purge (4a) et une conduite de purge de contournement (4b) dont l'orientation est telle que l'air sortant entraîne la matière déposée sur le fond du tube détecteur (4).

8. Appareil de granulation d'une matière pulvérulente absorbant l'humidité comportant une chambre dans laquelle la matière pulvérulente est maintenue dans un état d'agitation et des moyens pour ajouter un liant sous forme liquide à la matière pulvérulente de sorte qu'en utilisation, la matière pulvérulente est agglomérée en granules, caractérisé en ce qu'il comporte un hygromètre (3) à absorption d'infrarouges disposé dans la chambre (1a) ou un espace (4) en communication directe avec cette chambre et il est agencé pour surveiller continuellement la teneur en humidité de la matière pulvérulente d'une façon sans contact et des moyens (6, 7) servant à régler le débit d'arrivée du liant ou la quantité de liant fournie selon ladite teneur en humidité.

9. Appareil selon la revendication 8, caractérisé en ce qu'il comporte des moyens pour maintenir la matière pulvérulente dans un état d'agitation comprenant un ventilateur (8) destiné à souffler de l'air à travers le fond de la chambre (1a).

10. Appareil selon la revendication 9, caractérisé en ce qu'un détecteur de température (10) contrôle la température de l'air chaud fourni à la chambre et il est connecté à un dispositif (11) servant à fournir de la chaleur à l'air de façon à maintenir la température de l'air à une valeur sensiblement constante.

11. Appareil selon l'une quelconque des revendications 8 à 10, caractérisé en ce que les moyens d'addition de liant à la poudre comprennent un ajutage de pulvérisation (2) et une pompe (7) de distribution de liant.

12. Appareil selon l'une quelconque des revendications 8 à 11, caractérisé en ce qu'il comprend un tube détecteur (4) dans lequel est monté un hygromètre (3) et une conduite principale de purge (4a) à travers laquelle, en service, l'air est insufflé pour empêcher sensiblement la poudre d'entrer dans le tube détecteur (4).

13. Appareil selon la revendication 12, caractérisé en ce qu'il comporte une conduite de purge en dérivation (4b) dirigée de façon qu'en service, l'air sortant de cette conduite enlève la poudre déposée au fond du tube détecteur (4).

# FIG. 1

SPRAY AIR

BINDER LIQUID

MATERIAL TO BE GRANULATED

STEAM

PURGING AIR

DRAIN

BLOWING AIR

# FIG. 2

MATERIAL TO BE GRANULATED

# FIG. 3

Graph with upper section "MOISTURE CONTENT OF FLUIDIZED BED POWDER (%D.B.)" plotted on y-axis values 0–5, and lower section "YIELD OF PLUS 100-MESH SIEVE PRODUCT (%)" plotted on y-axis values 20–80, both against x-axis "AMOUNT OF BINDER ADDITION = BINDER (SOLID MATTER) / POWDER SOLID MATTER" with values 0.1, 0.2, 0.3.

# FIG. 4

NOTE I) PARENTHESIZED FIGURES SHOW AMOUNTS
OF BINDER ADDITION
(BINDER SOLID MATTER / POWDER SOLID MATTER)

NOTE 2) -------- DRYING OPERATION
        --·--·-- COOLING OPERATION